# EUROPEAN PATENT APPLICATION

(11) **EP 4 644 836 A1**
(43) Date of publication of application: **05.11.2025**
(21) Application number: 24173217.1
(22) Date of filing: 30.04.2024
(51) Int. Cl.: G01C 21/00

(54) **METHOD FOR DETECTING A ROAD MERGE, METHOD FOR CONTROLLING A VEHICLE, AND ADVANCED DRIVER ASSISTANCE SYSTEM**

(71) Applicant: AUMOVIO Autonomous Mobility Germany GmbH, 85057 Ingolstadt (DE)
(72) Inventor: Arakawa, Nobuya, Yokohama, 221-0031 (JP); Yoshimura, Nobuto, Yokohama, 221-0031 (JP); Yoshida, Tadashi, Yokohama, 221-0031 (JP)
(74) Representative: Aumovio Corporation

(57) **Abstract**

A computer-implemented method for detecting a road merge includes identifying a road connection connecting a current segment and one or more next segment ahead of the current segment, based on map data. The method further includes determining number of lanes in the current segment based on the map data, determining whether the one or more next segment comprises only one next segment based on the map data and determining number of lanes in the next segment based on the map data, upon determining that the one or more next segment comprises only one next segment. The method further includes detecting a road merge at the road connection based on determining that the number of lanes in the next segment is less than the number of lanes in the current segment.

## Description

### TECHNICAL FIELD

Various embodiments relate to a method for detecting a road merge, a method for controlling a vehicle, in particular, applied to an advanced driver assistance system.

### BACKGROUND

A road merge is a point where two streams of traffic travelling in the same direction from multiple roads or in multiple lanes on the same road are required to merge into a single lane. An example of a road merge is an entry point to a highway, such as a slip road that leads to a highway. Vehicles travelling on a main road near the entry point may run the risk of colliding into vehicles entering via the entry point. An existing solution to prevent the collision risk requires the vehicles to communicate and transmit their positions and speeds to one another, so as to coordinate the traffic at the entry point. This existing solution may not be feasible all the time, as not all vehicles are equipped with vehicle-to-vehicle communication systems. In view of the above, there is a need for a solution that can address the abovementioned problem.

### SUMMARY

According to various embodiments, there is provided a computer-implemented method for detecting a road merge. The method includes identifying a road connection connecting a current segment and one or more next segment ahead of the current segment, based on map data. The method further includes determining number of lanes in the current segment based on the map data, determining whether the one or more next segment comprises only one next segment based on the map data and determining number of lanes in the next segment based on the map data, upon determining that the one or more next segment comprises only one next segment. The method further includes detecting a road merge at the road connection based on determining that the number of lanes in the next segment is less than the number of lanes in the current segment.

According to various embodiments, there is provided a computer-implemented method for controlling a vehicle. The method for controlling the vehicle includes detecting a road merge according to the above-described method for detecting a road merge, and further includes generating a control command for decelerating the vehicle based on detection of the road merge.

According to various embodiments, there is provided an advanced driver assistance system (ADAS) for use with a vehicle. The ADAS includes a processor. The processor is configured to perform the above-described method for controlling a vehicle.

According to various embodiments, there is provided a computer program product that includes instructions which, when the computer program product is executed by a computer, cause the computer to carry out the above-described method of detecting a road merge or the above-described method for controlling a vehicle.

According to various embodiments, there is provided a computer-readable storage medium that includes instructions which, when executed by a computer, cause the computer to carry out the above-described method of detecting a road merge or the above-described method for controlling a vehicle.

Additional features for advantageous embodiments are provided in the dependent claims.

### BRIEF DESCRIPTION OF THE DRAWINGS

In the drawings, like reference characters generally refer to the same parts throughout the different views. The drawings are not necessarily to scale, emphasis instead generally being placed upon illustrating the principles of the invention. In the following description, various embodiments are described with reference to the following drawings, in which:
FIG. 1 shows an example of a road merge traffic scenario, where a merging lane merges into a main road.
FIG. 2 shows a flowchart of a method of controlling the vehicle, according to various embodiments.
FIG. 3 shows a flow diagram of a computer-implemented method for detecting a road merge according to various embodiments.
FIG. 4 shows a flow diagram of a computer-implemented method for controlling a vehicle according to various embodiments.
FIG. 5 shows a block diagram of an advanced driver assistance system (ADAS) according to various embodiments.

### DESCRIPTION

Embodiments described below in context of the devices are analogously valid for the respective methods, and vice versa. Furthermore, it will be understood that the embodiments described below may be combined, for example, a part of one embodiment may be combined with a part of another embodiment.

It will be understood that any property described herein for a specific device may also hold for any device described herein. It will be understood that any property described herein for a specific method may also hold for any method described herein. Furthermore, it will be understood that for any device or method described herein, not necessarily all the components or steps described must be enclosed in the device or method, but only some (but not all) components or steps may be enclosed.

The term "coupled" (or "connected") herein may be understood as electrically coupled or as mechanically coupled, for example attached or fixed, or just in contact without any fixation, and it will be understood that both direct coupling or indirect coupling (in other words: coupling without direct contact) may be provided.

In this context, the device as described in this description may include a memory which is for example used in the processing carried out in the device. A memory used in the embodiments may be a volatile memory, for example a DRAM (Dynamic Random Access Memory) or a non-volatile memory, for example a PROM (Programmable Read Only Memory), an EPROM (Erasable PROM), EEPROM (Electrically Erasable PROM), or a flash memory, e.g., a floating gate memory, a charge trapping memory, an MRAM (Magnetoresistive Random Access Memory) or a PCRAM (Phase Change Random Access Memory).

In order that the invention may be readily understood and put into practical effect, various embodiments will now be described by way of examples and not limitations, and with reference to the figures.

According to the Advanced Driver Assistance Systems Interface Specifications (ADASIS) Protocol, "segment" is defined as "Part of a Path where the attributes, most significant for ADAS applications, remain the same". In this context, "segment" may similarly refer to part of a traffic path, where the attributes remain the same. For example, a portion of the road having the same number of lanes and traffic direction, may be considered to be of the same segment. In this context, "road connection" refers to a point on where two segments meet.

In this context, "map data" may refer to a digital map data. The map data may be standard map data. The map data may include information on locations of road connections, but does not include information on the type of road connection, for example, whether the road connection is a merging connection where there is lane merging, or whether the road connection is a diverging connection where the road splits into more than one path. The map data may be stored in an onboard memory of a vehicle, or may be accessible from the vehicle through wireless communications.

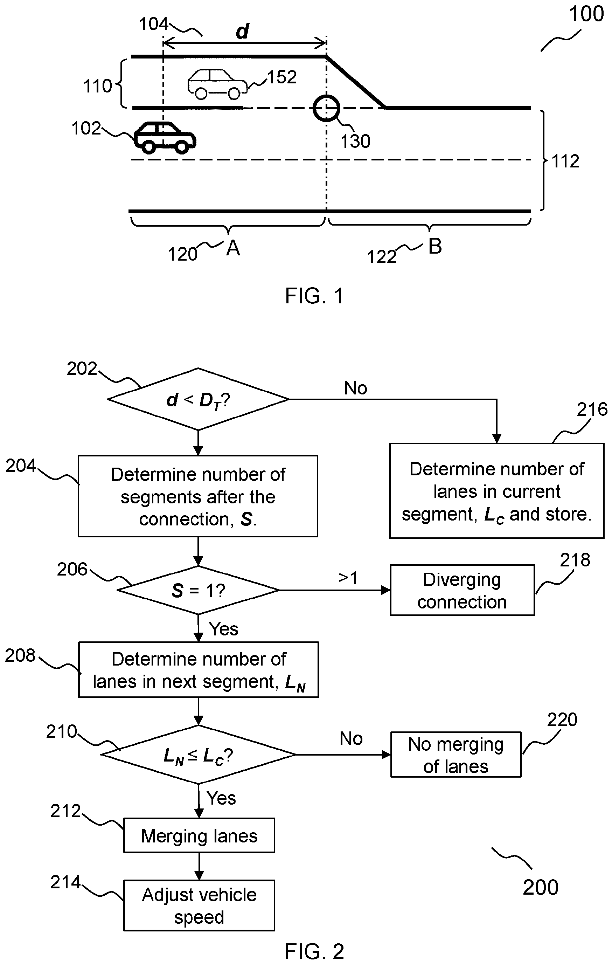

FIG. 1 shows an example of a road merge traffic scenario 100, where a merging lane 110 merges into a main road 112. The point where the merging lane 110 meets the main road 112 is referred herein as a road connection 130. The portion of the road marked as "A" 120 and the portion of the road marked as "B" 122 are two distinct segments. In this example, a vehicle 102 is travelling on the main road 112, and is in segment "A" 120, moving in a direction towards segment "B" 122. The segment "A" 120 is also referred to as "current segment" as the vehicle 102 is presently in the segment. The segment "B" 122 is referred to as "next segment" as it is ahead of the vehicle 102, along the travelling direction of the vehicle 102. The distance 104 between the vehicle 102 and the road connection 130 is denoted as d. Information about the segments "A" 120 and "B" 122 may be provided in the map data.

FIG. 2 shows a flowchart of a method 200 of controlling the vehicle 102, according to various embodiments. The method 200 may be performed by a processor. In an embodiment, the processor may be an onboard processor of the vehicle 102, for example, part of the assisted and automated driving control unit (ADCU) of the vehicle 102. In another embodiment, the processor may be external to the vehicle 102 and may receive information about the vehicle 102 from sensors onboard the vehicle 102.

As the vehicle 102 travels along a current segment, the processor may identify presence of a road connection 130 ahead of the vehicle 102 based on map data, and further based on position of the vehicle 102. The position of the vehicle 102 may be determined by a positional sensor, such as a Global Positioning System (GPS), that is mounted on the vehicle 102. In step 202, the processor may determine whether the distance 104, i.e., ***d*** is lesser than a distance threshold ***D_{T}**.* The processor may determine the distance 104 based on distance to end of the current segment, which is equal to the distance to the road connection 130.If the distance 104 is equal to, or more than the distance threshold, the vehicle 102 may be considered not to be near to the road connection 130. The processor may determine the number of lanes in the current segment where the vehicle 102 is and store the information, in step 216. The number of lanes in the current segment is herein denoted as ***L_{C}.***

If the distance 104 is lesser than the distance threshold, the vehicle 102 may be considered to be near to the road connection 130. The processor may then determine the number of segments after the road connection 130, in step 204. The number of segments after the road connection 130, in other words, the number of next segments, is herein denoted as ***S***. The processor may determine whether the number of next segments is 1, in step 206. If the number of next segments is more than 1, in other words, the current segment is connected to a plurality of next segments, the road connection 130 may be determined to be a diverging connection, in step 218.

If the number of next segments is 1, the processor may determine the number of lanes in the next segment, in step 208. The number of lanes in the next segment is denoted herein as ***L_{N}**.* The processor may determine whether the number of lanes in the next segment is less than or equal to, the number of lanes in the current segment, in step 210. If no, the processor may determine that there is no merging of lanes, in step 220.

If the number of lanes in the next segment is less than the number of lanes in the current segment, the processor may determine that there is merging of lanes at the road connection 130, in step 212. Consequently, the processor 214 may adjust the speed of the vehicle 102, in step 214.

In the following, the method 200 is explained, with respect to the example road merge traffic scenario 100 of FIG. 1. The current segment is segment "A" 120, where the vehicle 102 is travelling on. The map data may indicate to the processor that there is a road connection 130 ahead of the vehicle 102. In step 202, the processor determines whether ***d*** is equal to, or more than ***D_{T}**.* When the vehicle 102 is still far away from the road connection 130, the processor determines that ***L_{C}*** = 2, and stores the value of ***L_{C}*** in a memory, in step 216. When the vehicle 102 moves nearer to the road connection 130 such that ***d** < **D_{T}**,* the processor determines ***S,*** in step 204. There is only a single next segment connected to the segment "A" 120, i.e., segment "B" 122. As such, the processor determines that ***S***=1 in step 206, and determines ***L_{N}*** in step 208. Segment "B" 122 has 2 lanes, in other words, ***L_{N}*** = 2. In step 210, the processor compares ***L_{N}*** to ***L_{C}*** and concludes that ***L_{N}*** = ***L_{C}**.* As a result, the processor concludes that the road connection 130 includes a road merge, in step 212. The processor may adjust the vehicle speed, for example, to decelerate the vehicle 102, to accommodate vehicles coming in from the merging lane 110. If another vehicle 152 appears in the merging lane 110, the processor may receive information (for example, speed and position) about the other vehicle 152 from sensor data. The sensor data may be generated for example, by a camera sensor, a radar sensor, or an ultrasonic sensor that may be capable of detecting other objects near to the vehicle 102. The processor may determine that the other vehicle 152's travelling lane did not exist earlier, and may conclude that the other vehicle 152 is cutting into the path of the vehicle 102. Consequently, the processor may instruct the vehicle 102 to decelerate to avoid collision with the other vehicle 152. To this end, the processor may determine the required deceleration of the vehicle 102, based on the velocity of the other vehicle 152, the position of the other vehicle 152, the position of the vehicle 102, and the velocity of the vehicle 102.

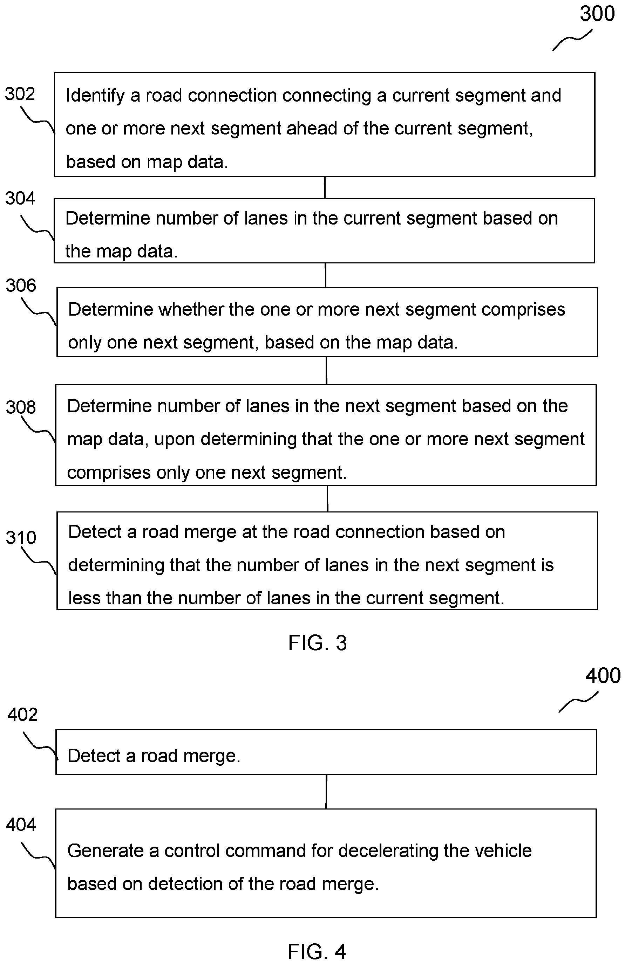

FIG. 3 shows a flow diagram of a computer-implemented method 300 for detecting a road merge according to various embodiments. The method 300 may include processes 302, 304, 306, 308, and 310. The process 302 may include identifying a road connection 130 connecting a current segment and one or more next segment ahead of the current segment, based on map data. The process 304 may include determining number of lanes in the current segment based on the map data. The process 306 may include determining whether the one or more next segment comprises only one next segment, based on the map data. The process 308 may include determining number of lanes in the next segment based on the map data, upon determining that the one or more next segment include only one next segment. The process 310 may include detecting a road merge at the road connection 130 based on determining that the number of lanes in the next segment is less than or equal to, the number of lanes in the current segment. Advantageously, a vehicle may use the method 300 to determine that it is approaching a merging connection, which allows the vehicle to plan for actions to take, in view of the possibility of other vehicles cutting into its lane at the merging connection.

According to an embodiment which may be combined with any above-described embodiment or with any below described further embodiment, the map data is standard map data that does not indicate whether the road connection 130 includes a road merge. Advantageously, the method 300 allow the vehicle 102 to determine whether it is approaching a merging connection, without requiring access to high-definition map data.

FIG. 4 shows a flow diagram of a computer-implemented method 400 for controlling a vehicle 102 according to various embodiments. The method 400 may include processes 402 and 404. The process 402 may include detecting a road merge according to the method 300 when the vehicle 102 is traveling on the current segment. The process 404 may include generating a control command for decelerating the vehicle 102 based on detection of the road merge. The method 400 may include the method 200 described with respect to FIG. 2.

According to an embodiment which may be combined with any above-described embodiment or with any below described further embodiment, the method 400 may further include determining distance between the vehicle 102 and the road connection 130, and initiating detection of the road merge, upon determining that the distance between the vehicle 102 and the road connection 130 is less than a distance threshold.

According to an embodiment which may be combined with any above-described embodiment or with any below described further embodiment, determining distance between the vehicle 102 and the road connection 130 may include determining position of the vehicle 102 based on vehicle positional sensor data, determining position of the road connection 130 based on the map data, and comparing the position of the vehicle 102 to the position of the road connection 130.

According to an embodiment which may be combined with any above-described embodiment or with any below described further embodiment, the method 400 may further include detecting another vehicle on an adjacent lane to the vehicle 102, based on sensor data, and generating the control command for decelerating the vehicle 102, further based on the detection of the other vehicle.

According to an embodiment which may be combined with any above-described embodiment or with any below described further embodiment, the method 400 may further include determining speed and position of the other vehicle on the adjacent lane, and generating the control command for decelerating the vehicle 102, further based on the speed and position of the other vehicle.

According to various embodiments, a computer program product may be provided. The computer program product may include instructions which, when the computer program product is executed by a processor, cause the processor to carry out the method 300 or 400.

According to various embodiments, a non-transitory computer-readable medium may be provided. The computer-readable medium may include instructions which, when executed by a processor, cause the processor to carry out the method 300 or 400.

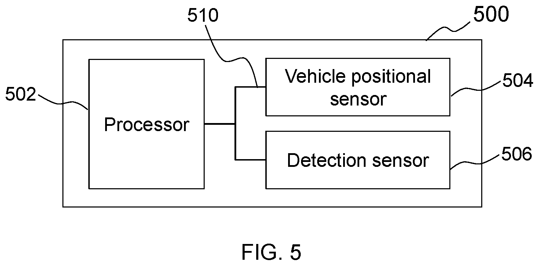

FIG. 5 shows a block diagram of an advanced driver assistance system (ADAS) 500 according to various embodiments. The ADAS 500 may include a processor 502. The processor 502 may be configured to perform the method 400. The ADAS 500 may optionally further include a vehicle positional sensor 504 and a detection sensor 506. The vehicle positional sensor 504 may be configured to determine position of the vehicle 102 for which the ADAS is in use with. The detection sensor 506 may be configured to detect other vehicles within proximity of the vehicle 102. The vehicle positional sensor 504 may be, for example, a GPS device or an inertial measurement unit. The detection sensor 506 may be, for example, a camera, a radar, a LiDAR, or an ultrasonic sensor. The processor 502, the vehicle positional sensor 504 and the detection sensor 506 may be connected, mechanically, or electrically, or communicatively, via coupling lines 510.

While embodiments of the invention have been particularly shown and described with reference to specific embodiments, it should be understood by those skilled in the art that various changes in form and detail may be made therein without departing from the spirit and scope of the invention as defined by the appended claims. The scope of the invention is thus indicated by the appended claims and all changes which come within the meaning and range of equivalency of the claims are therefore intended to be embraced. It will be appreciated that common numerals, used in the relevant drawings, refer to components that serve a similar or the same purpose.

It will be appreciated to a person skilled in the art that the terminology used herein is for the purpose of describing various embodiments only and is not intended to be limiting of the present invention. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

It is understood that the specific order or hierarchy of blocks in the processes / flowcharts disclosed is an illustration of exemplary approaches. Based upon design preferences, it is understood that the specific order or hierarchy of blocks in the processes / flowcharts may be rearranged. Further, some blocks may be combined or omitted. The accompanying method claims present elements of the various blocks in a sample order, and are not meant to be limited to the specific order or hierarchy presented.

The previous description is provided to enable any person skilled in the art to practice the various aspects described herein. Various modifications to these aspects will be readily apparent to those skilled in the art, and the generic principles defined herein may be applied to other aspects. Thus, the claims are not intended to be limited to the aspects shown herein, but is to be accorded the full scope consistent with the language claims, wherein reference to an element in the singular is not intended to mean "one and only one" unless specifically so stated, but rather "one or more." The word "exemplary" is used herein to mean "serving as an example, instance, or illustration." Any aspect described herein as "exemplary" is not necessarily to be construed as preferred or advantageous over other aspects. Unless specifically stated otherwise, the term "some" refers to one or more. Combinations such as "at least one of A, B, or C," "one or more of A, B, or C," "at least one of A, B, and C," "one or more of A, B, and C," and "A, B, C, or any combination thereof' include any combination of A, B, and/or C, and may include multiples of A, multiples of B, or multiples of C. Specifically, combinations such as "at least one of A, B, or C," "one or more of A, B, or C," "at least one of A, B, and C," "one or more of A, B, and C," and "A, B, C, or any combination thereof' may be A only, B only, C only, A and B, A and C, B and C, or A and B and C, where any such combinations may contain one or more member or members of A, B, or C. All structural and functional equivalents to the elements of the various aspects described throughout this disclosure that are known or later come to be known to those of ordinary skill in the art are expressly incorporated herein by reference and are intended to be encompassed by the claims.

## Claims

1. A computer-implemented method (300) for detecting a road merge, the method (300) comprising:
identifying a road connection connecting a current segment and one or more next segment ahead of the current segment, based on map data (302);
determining number of lanes in the current segment based on the map data (304);
determining whether the one or more next segment comprises only one next segment, based on the map data (306);
determining number of lanes in the next segment based on the map data, upon determining that the one or more next segment comprises only one next segment (308); and
detecting a road merge at the road connection based on determining that the number of lanes in the next segment is less than or equal to, the number of lanes in the current segment (310).

2. The method (300) of any preceding claim, wherein the map data is standard map data that does not indicate whether the road connection comprises a road merge.

3. A computer-implemented method (400) for controlling a vehicle, the method comprising:
detecting a road merge according to the method (300) of any one of claims 1 to 2, wherein the vehicle is traveling on the current segment (402); and
generating a control command for decelerating the vehicle based on detection of the road merge (404).

4. The method (400) of claim 3, further comprising:
determining distance between the vehicle and the road connection; and
initiating detection of the road merge, upon determining that the distance between the vehicle and the road connection is less than a distance threshold.

5. The method (400) of claim 4, wherein determining distance between the vehicle and the road connection comprises
determining position of the vehicle based on vehicle positional sensor data, and
determining position of the road connection based on the map data, and
comparing the position of the vehicle to the position of the road connection.

6. The method (400) of any one of claims 3 to 5, further comprising:
detecting another vehicle on an adjacent lane to the vehicle, based on sensor data; and
generating the control command for decelerating the vehicle, further based on the detection of the other vehicle.

7. The method (400) of claim 6, further comprising:
determining speed and position of the other vehicle on the adjacent lane; and
generating the control command for decelerating the vehicle, further based on the speed and position of the other vehicle.

8. An advanced driver assistance system (500) for use with a vehicle (102), the advanced driver assistance system (500) comprising:
a processor (502) configured to perform the method (400) of any one of claims 3 to 7.

9. The advanced driver assistance system (500) of claim 8, further comprising:
a vehicle positional sensor (504) configured to determine position of the vehicle (102) for which the advanced driver assistance system (500) is in use with; and
a detection sensor (506) configured to detect other vehicles within proximity of the vehicle (102).

10. A computer program product comprising instructions which, when the computer program product is executed by a computer, cause the computer to carry out the method (300, 400) of any one of claims 1 to 7.

11. A computer-readable storage medium comprising instructions which, when executed by a computer, cause the computer to carry out the method (300, 400) of any one of claims 1 to 7.
